# EUROPEAN PATENT APPLICATION

(11) **EP 1 316 259 A1**
(43) Date of publication of application: **04.06.2003**
(21) Application number: 02380243.2
(22) Date of filing: 27.11.2002
(51) Int. Cl.: A23L 3/015, A23B 7/00, A23L 1/216, A23L 1/217

(54) **Cut or sliced potato obtainable by a high-pressure process**

(30) Priority: 29.11.2001 ES 200102732
(71) Applicant: Igarane Medios, S.L., 31011 Pamplona (ES)
(72) Inventor: Guamis Lopez, Buenaventura, 31011 Pamplona (ES); Quevedo Terre, Joan Miquel, 31011 Pamplona (ES); Daoudi, Lamya, 31011 Pamplona (ES)
(74) Representative: Ponti Sales, Adelaida

(57) **Abstract**

Said potato is obtainable by means of a high-pressure process, said process comprising the following steps: (a) packing of said potato; (b) increase of the pressure up to a value between 200 and 700 MPa during a period of time between 30 and 300 seconds; (c) maintaining the pressure for a period of time between 30 seconds and 30 minutes at a temperature between 0 and 40 ° C, and (d) decreasing the pressure to atmospheric pressure for a period of time between 20 and 120 seconds.

The cut potato thus obtained keeps its organoleptic properties for a longer period of time.

## Description

### FIELD OF THE INVENTION

This invention relates to cut or sliced potato obtainable by a high-pressure process.

The cut or sliced potato of the invention can be kept in refrigeration for a period of about six months.

### BACKGROUND OF THE INVENTION

High-pressure technology is widely known in the field of the science of inorganic materials, where pressures higher than 100 MPa are combined with temperatures of about 1,000°C.

This technology is of special interest in the food processing sector. In fact, this type of processing has been described in several publications, though in many cases the main technological problem has been how to handle foods at such high pressures.

Currently, and due to technological breakthroughs, the main benefit of this technology lies in the fact that the treatment can be performed at room temperature, which permits the quality parameters of the original product to be maintained, among other advantages, such as the inactivation of vegetative microbial cells without the smell, taste or colour of the food being altered.

In this sense, there are several studies that illustrate the effect of high pressures on the texture of vegetal products and fruits. Fonberg-Broczek (1997) describe a high-pressure treatment which improves the quality of fruits, the consistency, the colour and smell of fresh fruits, and also provides a microbiological stability for more than three months storage in refrigeration between 3 and 5°C.

However, depending on the initial product and on the treatment given thereto, the organoleptic characteristics of said product may be altered.

More particularly, a cut potato shows several disadvantages for its perfect preservation, this due to the fact that very strict moisture and temperature conditions are required in order to keep its organoleptic properties (colour, appearance, etc.). In this sense, the existence in the market of frozen cut potatoes is known, and cut potatoes preserved in modified atmospheres have begun to be commercialised. However, a known problem exists that when frozen potatoes are fried, water is expelled into the oil, thereby spoiling it and, on the other hand, cut potatoes subjected to a modified atmosphere can only be preserved for a short period of time (less than a week).

Accordingly, the object of the present invention is a cut potato which, subjected to a high-pressure process, solves the disadvantages mentioned above and keeps the organoleptic properties for a longer period of time.

### DESCRIPTION OF THE INVENTION

This invention relates to a cut or sliced potato obtainable by a high-pressure process, said process comprising the following steps:
(a) packing of said potato,
(b) increase of the pressure up to a value between 200 and 700 MPa for a period of time between 30 seconds and 5 minutes,
(c) maintaining the pressure for a period of time between 30 seconds and 30 minutes at a temperature between 0 and 40 ° C,
(d) decreasing the pressure to atmospheric pressure for a period of time between 20 and 120 seconds.

In the present invention, "high-pressure process" is understood to mean a product subject to pressures higher than 100 MPa.

With the process of the invention, the preservation of the cut potato is guaranteed for a long period of time in refrigerated conditions, maintaining the good appearance and the organoleptic characteristics until it is fried and consumed. The oil used for frying lasts longer, since the potato obtainable according to the process of the invention expels less water and the frying temperature used can be lower than in normal circumstances. Once fried, the potato shows improved texture, and maintaining its crispy properties for a longer period of time.

Preferably, during step (b), pressure is increased up to a value of between 350 and 700 MPa.

Optionally, and prior to step (a), the cut potato may be fried.

There follows a detailed description of the object of the present invention.

### DETAILED DESCRIPTION OF THE INVENTION

Once the potatoes have been peeled, they are cut into pieces, then pre-fried or not, in vegetable or animal oils at temperatures between 140°C and 180°C and subsequently vacuum-packed or packed in an atmosphere with different types of gases or in isotonic solutions containing antioxidants (such as ascorbic acid or extracts or solutions of natural plants which provide said antioxidants, such as acerola). The package used characterized by its flexibility and by the fact that it is suitable for the treatment to high pressure.

The packaged potato is subject to a high-pressure process. For this purpose, discontinuous high isostatic pressure devices are used. The maximum pressure reached is 700 MPa, while pressures between 300 and 700 MPa can be used when necessary. The time required for increasing the pressure of the treatment is between 30 and 300 seconds, depending on the machine used, the pressure reached is maintained for a period of time of between 30 seconds and 30 minutes and then it is decreased during a period of time of between 30 and 120 seconds.

The pressurization precinct and the water contained were adjusted to the temperature of treatment by means of a continuous flow of water circulating between the machine and a bath of water in order to increase the temperatures. The temperatures of treatment range between 0°C and 40°C and the times between 30 seconds and 30 minutes.

The characteristics of the cut or sliced potato obtainable according with the process of the invention are 35 the following:
- In the case of raw cut potato, it does not darken during its preservation period, neither are its appearance, texture and organoleptic characteristics altered.
- At refrigerated temperature of between 2 and 8°C it can be preserved for more than three months. In the case of a pre-fried potato, its preservation is even longer, about six months, in refrigerated conditions of between 2°C and 8°C.
- The resulting product after frying is crispier, keeping this characteristic for a longer period of time than with other potato not obtained by means of the process of the invention.

Finally, another advantageous aspect is the fact that it is possible to shorten the subsequent frying times, as well as to decrease the temperatures of oil, thus permitting a lower spoiling of the oil, improving its recycling and contributing to minimizing the environmental pollution, as well as permitting to save energy.

There follows an illustration by way of non-limitative example of an embodiment of the present invention.

### EXAMPLE

The potatoes are washed, peeled and properly cut into pieces for their frying. The pieces can have different formats, from dices to slices.

They are then pre-fried in oil for one minute.

Next they are vacuum-packed in a flexible package.

They are subsequently introduced into a high-pressure device at 4°C and are subject to a pressure of 350 MPa.

The time required for reaching this pressure is of about two minutes.

Once the pressure is reached, and after a period of time of between 1 and 2 minutes, it is depressurised up to a pressure close to the atmospheric pressure is reached. The decompression time is of between 30 seconds and two minutes.

The packages are then taken out from the machine, labelled and kept in a refrigeration chamber at a temperature between 0 and 8° C until their distribution.

## Claims

1. Cut or sliced potato obtainable by a high-pressure process, said process comprising the following steps:
(a) Packing of the sliced or cut potato,
(b) Increase of the pressure up to a value between 200 and 700 MPa for a period of time between 30 and 300 seconds.
(c) Maintaining the pressure for a period of time between 30 seconds and 30 minutes at a temperature of between 0 and 40°C.
(d) Decreasing the pressure to atmospheric pressure for a period of time between 20 and 120 seconds.

2. Cut potato according to claim 1, **characterised in that** prior to step (a), the sliced or cut potato is pre) fried.

3. Cut potato according to claim 1, **characterised in that** during step (b), pressure is increased up to a value of between 300 and 450 MPa.
